(19) Europäisches Patentamt

European Patent Office

Office européen des brevets

(11) Numéro de publication : **0 001 951**

**B1**

(12) **FASCICULE DE BREVET EUROPÉEN**

(45) Date de publication du fascicule du brevet :
17.06.81

(21) Numéro de dépôt : **78400152.1**

(22) Date de dépôt : **27.10.78**

�milialCl.³ : **G 03 B 15/10**

(54) Dispositif de projection permettant la prise de vue de l'image projetée d'un objet.

(30) Priorité : **04.11.77 FR 7733266**

(43) Date de publication de la demande :
**16.05.79 (Bulletin 79/10)**

(45) Mention de la délivrance du brevet :
**17.06.81 Bulletin 81/24**

(84) Etats contractants désignés :
**CH DE FR GB NL**

(56) Documents cités :
**DE - B - 2 426 386**

(73) Titulaire : **BALCAR**
**32, Boulevard Flandrin**
**F-75116 Paris (FR)**

(72) Inventeur : **Baliozian, Mardick**
**15, Route de Val Martin**
**Sainte Gemme, Feucherolles Yvelines (FR)**

(74) Mandataire : **Tony-Durand, Serge et al**
**Cabinet Tony-Durand 22, Boulevard Voltaire**
**F-75011 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 17, rue du Louvre, 75001 Paris, France

Dispositif de projection permettant la prise de vue de l'image projetée d'un objet.

La présente invention a pour objet un dispositif de projection, permettant la prise de vue de l'image projetée d'un objet, destiné notamment à la photographie, au cinéma et à la télévision.

On connaît des dispositifs de projection dite « frontale » qui permettent de projeter en transparence des diapositives sur un écran réfléchissant, par l'intermédiaire d'un miroir semi-réfléchissant. Celui-ci a deux fonctions : il réfléchit vers l'écran l'image que l'on désire projeter derrière le sujet, et il laisse passer vers l'appareil photographique une partie de la lumière renvoyée par l'écran.

Un tel système ne permet que la projection de documents transparents tels que diapositives, des documents opaques tels que des cartes postales devant par conséquent être au préalable traités pour en tirer des diapositives utilisables dans un tel appareil de projection frontale. Dans tous les appareils connus de ce type, on aligne optiquement l'objectif de l'appareil de prise de vue avec l'objectif d'un projecteur, de façon à pouvoir projeter une image sur l'écran rétro-réfléchissant sans que l'objectif de l'appareil photographique ne perçoive l'ombre du sujet sur l'écran. L'objectif de projection de ce genre de dispositif est prévu pour projeter uniquement l'image d'un document transparent, par exemple du format 6 × 6 cm ou 24 × 36 mm.

D'autre part, on connaît des appareils capables de projeter des images de documents opaques, tels que ceux connus sous le terme Episcope ou Epidiascope.

Ces appareils sont simplement posés sur une table, en appui à leur partie avant sur des dispositifs de réglage en hauteur. Cependant, ces appareils ne peuvent être utilisés de façon satisfaisante avec des flashes électroniques ou des lampes de faible puissance, sont d'un réglage difficile et ne peuvent être combinés avec des appareils de prise de vue (photo, caméra) de tous types et de toutes dimensions. Le système optique des sources lumineuses a également une très faible efficacité.

L'invention a pour but de remédier à ces inconvénients en permettant de réaliser un dispositif capable de projeter aussi bien les images de documents transparents tels que des diapositives, que les images de documents opaques comme des cartes postales, et ce dans des conditions optiques tout à fait satisfaisantes.

A cet effet le dispositif de projection permettant la prise de vue de l'image projetée d'un objet conforme à l'invention comprend un boîtier agencé pour recevoir ledit objet à projeter ainsi qu'une source lumineuse, un système réflecteur placé à l'intérieur du boîtier de façon à réfléchir la lumière émise par la source sur l'objet à projeter, la face supérieure du boîtier étant percée pour permettre le passage du flux lumineux dans un système optique de projection placé au-dessus du boîtier et destiné à coopérer avec un appareil de prise de vue de l'image projetée sur l'écran, de l'objet disposé dans le boîtier, ce dernier étant assujetti de façon réglable en hauteur à un montant de support, et en ce que des moyens réglables sont prévus pour permettre un couplage optique entre d'une part l'appareil de prise de vue et d'autre part le système optique de projection et le boîtier.

Lorsque ce dispositif est utilisé pour la projection d'objets opaques, ceux-ci sont placés sur le fond du boîtier, sans qu'il soit nécessaire au préalable d'en faire des copies en diapositives couleur, comme cela est le cas avec les appareils de projection frontale connus. On évite par conséquent une perte de temps et des frais entraînés par cette étape intermédiaire de reproduction.

Suivant un mode de réalisation de l'invention, dans lequel le boîtier est réalisé par exemple en tronc de pyramide dont la plus grande face constitue le fond, lequel est pourvu d'un support central rotatif prévu pour recevoir au moins un objet opaque à projeter, la source lumineuse est disposée à l'intérieur d'un premier réflecteur en forme de calotte d'ellipsoïde et fixée à une paroi latérale, et le système réflecteur comprend en outre un second réflecteur ellipsoïdal ou cylindrique fixé à la paroi du boîtier situé en face du premier réflecteur, et deux autres réflecteurs fixés aux parois latérales, pliés en accordéon avec des facettes réfléchissantes constituées par des portions d'ellipsoïde, ces derniers réflecteurs recevant la lumière non réfléchie par le premier et le second réflecteurs.

Un tel système réflecteur a un rendement extrêmement élevé par rapport aux systèmes connus, et permet l'obtention d'images en couleur de contraste et de qualité supérieurs.

Suivant une autre forme de réalisation, le dispositif selon l'invention est destiné plus particulièrement à la projection de diapositives, et la calotte ellipsoïdale précitée munie de la source lumineuse est disposée sur le fond du boîtier.

La lumière émise par celle-ci est réfléchie vers la zone centrale de la face supérieure du boîtier percée à cet effet, cette zone centrale étant munie d'un dispositif de support du document transparent tel que diapositive à projeter.

Pour passer du mode de réalisation permettant la projection de documents opaques à celui permettant la projection de diapositives, il suffit de déplacer le premier réflecteur précité pour le disposer sur le fond du boîtier avec la source lumineuse associée, et de positionner au-dessus de ce réflecteur le dispositif de support des diapositives. Le passage de l'une à l'autre des deux formes de réalisation du dispositif selon l'invention est donc très simple et commode.

D'autres particularités et avantages de l'invention apparaîtront au cours de la description qui va suivre. Aux dessins annexés, donnés à titre d'exemples, on a représenté trois formes de réalisation du dispositif selon l'invention.

— La figure 1 est une vue en perspective d'un premier mode de réalisation du dispositif de projection selon l'invention, destiné à la projection d'objets opaques.

— La figure 2 est une vue en coupe transversale du boîtier visible à la figure 1.

— La figure 3 est une vue en plan du boîtier des figures 1 et 2, prise sous la face supérieure de celui-ci.

— La figure 4 est une vue schématique partielle à échelle agrandie montrant le premier réflecteur et un réflecteur latéral plié en accordéon, avec les trajets optiques suivis par la lumière entre la source lumineuse et l'objet.

— La figure 5 est une vue en perspective partielle d'une seconde forme d'exécution du dispositif selon l'invention, destinée à la projection de documents transparents.

— La figure 6 est une vue en coupe partielle à échelle agrandie du dispositif de support de documents transparents visible à la figure 5.

— La figure 7 est une vue en perspective d'une troisième forme d'exécution du dispositif selon l'invention.

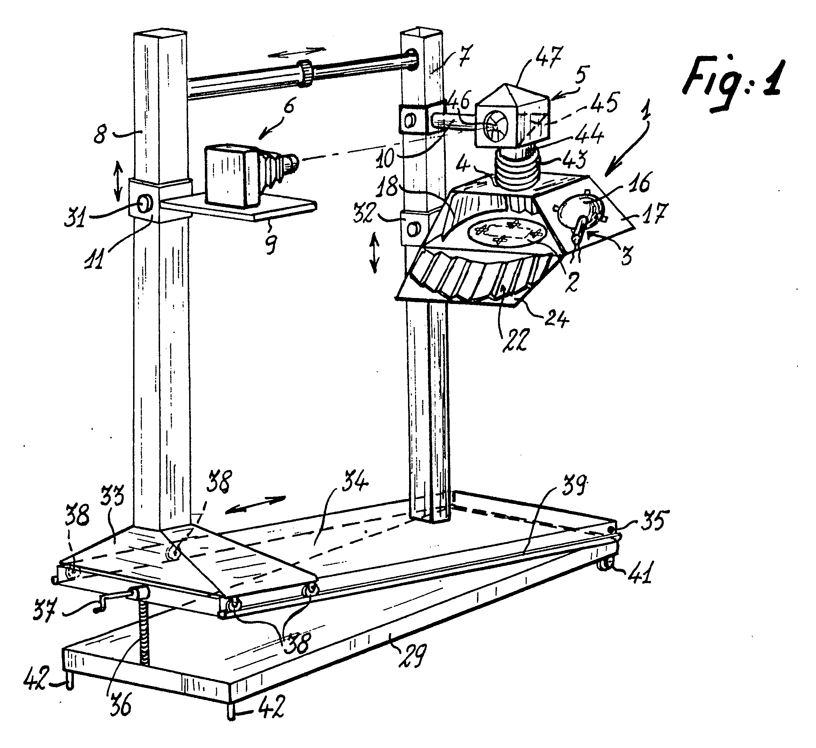

Dans la forme d'exécution représentée aux figures 1 à 4, le dispositif de projection selon l'invention est destiné à la projection de documents opaques en deux dimensions tels que des cartes postales, ou même des objets en trois dimensions, pour la photographie, le cinéma ou la télévision.

Ce dispositif comprend un boîtier 1 agencé pour recevoir un objet 2 à projeter ainsi qu'une source lumineuse 3, un système réflecteur placé à l'intérieur du boîtier 1, de façon à réfléchir la lumière émise par la source 3 sur l'objet porté par le support. La face supérieure du boîtier 1 est amovible et percée d'une ouverture 4 au-dessus du support 2, pour permettre le passage du flux lumineux dans un système optique 5 de projection placé au-dessus du boîtier 1, et qui projette l'image de l'objet sur un écran non représenté.

Le système optique 5 coopère avec un appareil de prise de vue 6 devant photographier l'image projetée sur un écran rétroréfléchissant (non représenté) d'un objet positionné sur le support 2. Le boîtier 1, qui a une configuration en tronc de pyramide dans l'exemple représenté, est assujetti de façon réglable en hauteur à un montant vertical 7 de support, des moyens réglables étant prévus complémentairement pour permettre un couplage optique convenable entre, d'une part l'appareil photographique 6 et d'autre part l'ensemble système optique 5-boîtier 1.

Ces moyens comportent en particulier un montant vertical 8 auquel est assujettie une plaquette horizontale 9 réglable en hauteur au moyen d'une bague coulissante 11 entourant le montant 8, l'appareil 6 étant placé sur la plaquette 9.

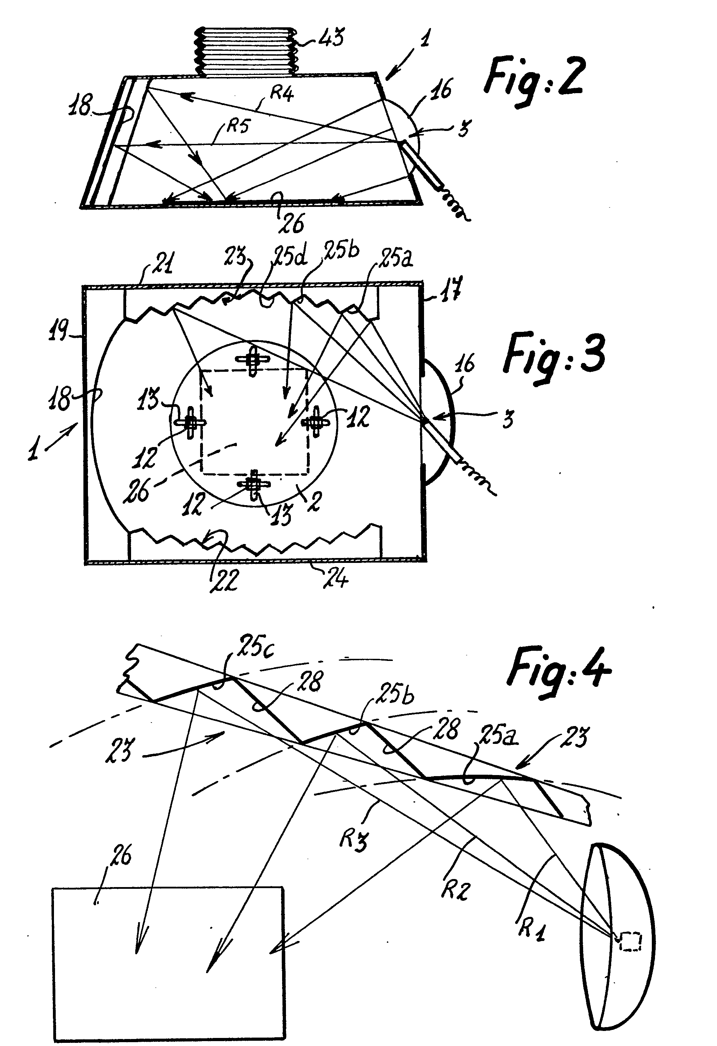

Le support central 2 est constitué par un disque rotatif amovible placé à l'intérieur du fond du boîtier de façon connue en soi, et muni sur sa face supérieure de pattes 12 disposées en croix (figure 3) et pouvant coulisser dans des rainures 13 de guidage elles-mêmes disposées en croix. Les rainures 13 et les pattes 12 sont ainsi au nombre de 4 dans la réalisation représentée, un document opaque par exemple carte postale de format variable, pouvant être fixé sur le support 2 par coulissement de ces pattes ou griffes de maintien 12. En outre, le pivotement du support 2 autour de son axe, et plus précisément autour d'une bille centrale non représentée, permet de régler l'angle selon lequel l'image est projetée sur l'écran. On peut ainsi déplacer le support 2 de façon que les objets ou documents placés sur celui-ci soient projetés à l'endroit désiré sur l'écran.

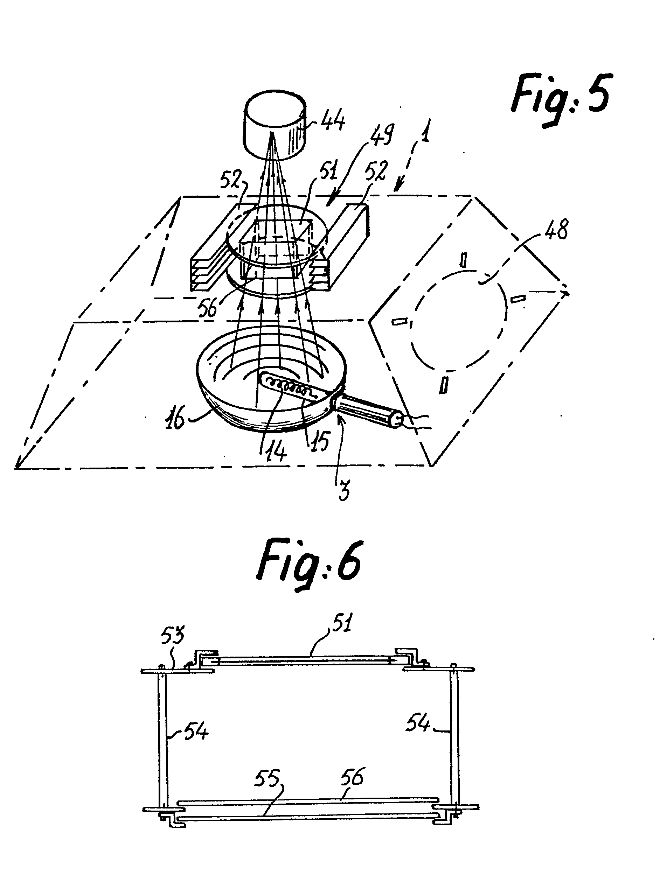

La source lumineuse 3, d'un type connu en soi est constituée par l'assemblage d'un tube flash électronique 14 et d'une lampe « guide » à incandescence 15, cette source lumineuse étant visible plus clairement à la figure 5. Mais la source lumineuse peut aussi être simplement constituée, soit par le tube flash, soit par une lampe, par exemple du type à incandescence. Dans la réalisation représentée aux figures 1 à 4, la source 3 est disposée à l'intérieur d'un premier réflecteur 16 en forme de calotte d'ellipsoïde fixé à une paroi latérale 17 du boîtier 1 opposée au montant vertical de support 7. Le système réflecteur comporte en outre un second réflecteur 18, constitué par une portion de cylindre à section elliptique ou cylindrique. Le réflecteur 18 est fixé à la paroi 19 du boîtier 1, situé en face du premier réflecteur 16. Les deux autres réflecteurs 23, 22 sont fixés chacun à une paroi latérale 21, 24, et pliés en accordéon avec des facettes réfléchissantes telles que 25a, 25b, 25c... (figures 3 et 4). Ces facettes sont constituées par des portions d'ellipsoïdes de dimensions et d'orientation appropriées par rapport à la source lumineuse 3 et à l'objet 26 à éclairer, afin de recevoir la lumière non réfléchie par le premier et le second réflecteurs 16, 18 pour la renvoyer sur des parties prédéterminées de l'objet à éclairer 26.

Quelques trajets optiques suivis par les rayons lumineux entre la source 3 et les premières facettes réfléchissantes 25a, 25b... du réflecteur 23 sont représentés à la figure 4, sur laquelle on a également prolongé les facettes réfléchissantes de part et d'autre afin de représenter une partie du contour des ellipsoïdes dont elles font partie.

Les orientations ou inclinaisons des facettes 25a etc. par rapport au réflecteur 16 et à l'objet 26 sont donc différentes pour chacune d'elles, en fonction de l'incidence des rayons lumineux tels que R1, R2, R3 etc. envoyés vers l'objet 26.

Le côté 24 du boîtier 1 auquel est fixé le réflecteur en accordéon 22, est articulé sur des charnières non représentées, qui permettent de le faire pivoter pour autoriser l'accès à l'intérieur du boîtier 1, comme on le voit à la figure 1.

On peut ainsi introduire ou enlever le support 2 ainsi que l'objet ou les objets à éclairer. On peut arranger une composition d'objets à projeter, afin de composer le fond projeté sur l'écran avec toutes les particularités désirées.

Le réflecteur 18 reçoit la partie du flux lumineux provenant de la source 3, et qui n'a pas déjà été réfléchie par l'un ou l'autre des réflecteurs latéraux 23, 22. On voit ainsi sur la figure 2 le trajet optique suivi par deux rayons lumineux R4, R5, entre la source 3 et l'objet 26 après réflexion sur le réflecteur 18. La surface intérieure du boîtier 1 non recouverte par les réflecteurs 18, 22, 23, 16 et par l'objet 26, est noircie, afin d'éviter des réflexions parasites. En effet, les réflecteurs 16, 18, 22 et 23 sont placés de telle façon qu'ils ne puissent pas réfléchir de lumière sur la surface de l'objet 26, qui serait ensuite réfléchie par une surface brillante vers la lentille de projection du système optique 5. C'est pourquoi toute la surface intérieure du boîtier 1 qui ne doit pas contribuer à l'éclairement de l'objet 26 est noire. Par contre, quand on met sur la surface 26 certains objets métalliques ou métallisés, il est souvent souhaitable d'avoir des reflets qui sont visibles à l'endroit du système optique 5. C'est pourquoi, comme déjà indiqué précédemment, il est prévu que la surface supérieure du boîtier 1 est amovible, afin de pouvoir placer sur la face intérieure de celle-ci, ou bien une plaquette noire non réfléchissante, ou bien une plaquette réfléchissante, blanche et métallique.

Par ailleurs, les réflecteurs latéraux 22, 23 ont leurs facettes réfléchissantes non seulement orientées comme on le voit sur la figure 4, mais aussi inclinées par rapport au fond du boîtier 1, en direction du support 2, de façon à réfléchir effectivement le flux lumineux sur l'objet 26 et non vers les autres parois du boîtier.

Les facettes réfléchissantes 25a, 25b... sont séparées par des facettes intercalaires 28 (figure 4) non réfléchissantes, des surfaces réfléchissantes étant en effet inutiles sur ces parties des réflecteurs. En outre, ces derniers ont de préférence une épaisseur prédéterminée à peu près constante, ce qui peut faciliter leur fabrication.

Les moyens pour permettre le couplage optique entre l'ensemble formé par le boîtier 1 associé au système optique 5 et l'appareil de photo 6, comprennent une plate-forme 29 supportant un cadre 34 pivotant autour d'un axe 35, et sur lequel sont fixés les deux montants verticaux 7, 8 et ce de façon réglable en hauteur. L'appareil photographique, ou la caméra de cinéma ou de télévision placé sur la plaquette de support 9, ou suspendu à hauteur convenable, peut être mis à hauteur convenable en faisant coulisser la bague 11 sur le montant 8, le blocage en position étant assuré par un bouton rotatif 31. De son côté, le boîtier 1 est assujetti au montant 7 par un système analogue comportant une bague ou collier coulissant 32 entourant le montant 7, et pouvant être bloqué par un bouton approprié. Le montant 8 supportant l'appareil photographique ou la caméra est solidaire à sa base d'un socle 33 monté à coulisse sur le cadre 34, dont l'axe de pivotement 35 est assujetti transversalement à une extrémité de la plate-forme 29, de façon à passer au voisinage du montant 7. Le cadre 34 est pourvu à son extrémité opposée à l'axe de pivotement 35, d'un dispositif constitué par une tige filetée 36 fixée à la plate-forme 29 et supportant le cadre 34, et d'une manivelle 37 associée permettant de soulever le cadre 34 ainsi que le montant 8 sur la tige 36, de façon à faire pivoter le cadre 34 autour de l'axe 35.

Le socle 33 est monté à coulisse sur le cadre 34 de façon à pouvoir être déplacé en outre d'une extrémité à l'autre de celui-ci, les moyens prévus à cet effet étant constitués par un ensemble de plusieurs galets 38 assujettis aux angles du socle 33, et pouvant rouler sur des rails de guidage 39 fixés de chaque côté du cadre 34. Le système de roulement formé par le socle 33, les galets 38 et les rails longitudinaux 39, permet de rapprocher ou d'éloigner l'appareil photographique du système optique associé 5.

L'extrémité de la plate-forme 29 voisine du montant 7 est équipée de deux roulettes 41, tandis que l'extrémité opposée est munie de deux ergots ou doigts d'appui 42 fonctionnant comme freins pour maintenir en place l'ensemble du dispositif de projection, après que celui-ci ait été amené à l'emplacement convenable au moyen des roulettes 41.

Le système optique 5 est constitué de la manière suivante : un soufflet 43 autour de l'ouverture 4 du boîtier 1 assure la liaison entre celui-ci et l'objectif de projection 44, assujetti à une boîte comprenant un miroir 45 incliné à 45 degrés, semi-réfléchissant et semi-transparent. Cet organe est convenablement positionné, de façon à réfléchir le flux lumineux provenant du boîtier 1 et transmis par l'objectif 44, vers un écran de projection non représenté, disposé du côté opposé à l'appareil photographique ou à la caméra 6. La boîte contenant le miroir 45 est également munie, du côté tourné vers l'appareil photographique 6, d'un iris de centrage 46 d'un type connu en soi, ainsi que d'une hotte 47 fixée à sa partie supérieure et dont la surface interne est noire pour absorber la lumière reçue.

Les effets techniques et les avantages du dispositif conforme à l'invention sont les suivants :

— Pour mettre en action ce dispositif, on choisit tout d'abord un document opaque, par exemple une carte postale, et on le positionne convenablement à l'intérieur du boîtier 1 après avoir ouvert son côté 24 comme expliqué ci-dessus. On positionne ensuite l'appareil photographique ou la caméra sur sa plaquette de support 9, de façon convenable en utilisant le dispositif de roulement 38, 39, et la bague de réglage en hauteur 11, de façon à obtenir un couplage satisfaisant avec l'iris d'alignement 46. Lorsque la source de lumière 3 fonctionne, on obtient sur l'écran non représenté l'image de l'objet 26 fixé sur le support 2, et on peut placer devant cet écran un personnage, le tout pouvant être photographié par l'appareil photographique ou la caméra 6. S'il s'agit en effet de projeter des vues fixes à la télévision, on dispose sur la plaque 9 une caméra de télévision.

Le dispositif de projection selon l'invention utilise une seule source lumineuse 3, constituée par le tube flash électronique et/ou la lampe, par exemple du type à incandescence précité, alors que les dispositifs connus dits « épiscope » ou

« épidiascope » nécessitent la mise en œuvre de deux ou quatre sources lumineuses.

Par ailleurs, un avantage essentiel obtenu par une forme d'exécution de l'invention réside dans le fait que le système des réflecteurs 16, 18, 22, 23 collecte pratiquement toute la lumière émise par les deux éléments constituant la source lumineuse 3, et la réfléchissent sur l'objet 26 à projeter. De ce fait, on obtient un rendement optique très élevé, les facettes réfléchissantes 25a... des réflecteurs latéraux 22, 23 et les deux autres réflecteurs 16, 18 étant orientés de façon à éclairer pratiquement uniformément la totalité de la surface de l'objet. Ceci permet l'obtention sur l'écran, d'une image en couleur de très haute qualité, et de contraste très satisfaisants.

L'objectif 44 est de préférence muni d'un iris, extrêmement utile en ce sens qu'il permet de faire varier la quantité de lumière transmise jusqu'à l'écran, ainsi que d'accroître la profondeur de champ et la profondeur de mise au point. Ceci est particulièrement intéressant lorsqu'on veut projeter des objets opaques à trois dimensions. Les objectifs de protection des épiscopes connus sont dépourvus d'iris.

Parmi les objets à trois dimensions pouvant être projetés sur l'écran au moyen du dispositif selon l'invention, on peut donner comme exemples une main, une montre, des bijoux, un flacon etc.

La forme de réalisation du dispositif de projection représentée aux figures 5 et 6, est destinée spécialement à la projection de documents transparents tels que des diapositives. Afin de simplifier le dessin, on n'a pas représenté sur la figure 5 les réflecteurs 22 et 23 ni le réflecteur 18, le côté du boîtier 1 portant le réflecteur 22 étant enlevé.

Le système réflecteur utile est ici limité à la calotte ellipsoïdale 16, extraite de l'ouverture circulaire 48 de la paroi dans laquelle elle était encastrée avec la source lumineuse 3. Le réflecteur 16 et la source lumineuse 3 sont disposés sur le fond du boîtier 1, de façon que la lumière émise par la source 3 au centre de la calotte ellipsoïdale formant le réflecteur 16, soit réfléchie vers la zone centrale de la face supérieure du boîtier dans laquelle est percée l'ouverture 4, cette zone centrale étant munie d'un dispositif 49 de support d'une diapositive 51 à projeter sur l'écran. Ce dispositif, connu en soi, comprend deux supports latéraux 52 à fentes superposées parallèles, placés de chaque côté de l'emplacement réservé à la diapositive 51, et solidarisés avec le boîtier 1. La diapositive 51 est placée sur un support circulaire 53 approprié, qui est engagé de chaque côté dans une fente d'un support 52. Des tiges 54 sont fixées sur le support 53 de façon à pouvoir maintenir sous la diapositive 51 un filtre anti-thermique dicroïque 55 et un diffuseur 56, ces éléments étant solidarisés avec la base des tiges de support et d'espacement 54. Les supports 52 à fentes permettent de projeter le document transparent en couleur avec devant celui-ci : soit un iris, soit un masque magnétique, soit une seconde diapositive en couleur placée sous la diapositive 51 et retenue par les fentes des supports 52, ces éléments pouvant varier indépendamment l'un de l'autre. On peut également faire tourner le support 53 ou le déplacer en translation par rapport aux éléments 52.

On peut ainsi passer très commodément et facilement de la première forme de réalisation destinée à la projection des documents opaques à la seconde prévue pour la projection de documents transparents en couleur, simplement en déplaçant le réflecteur ellipsoïdal 16 de sa paroi latérale de support, jusqu'à sa position représentée à la figure 5, où il est encastré dans le fond du boîtier 1, le support 2 ayant été au préalable enlevé.

On peut aussi remplacer le miroir semi-réfléchissant et semi-transparent 45 par un miroir à surface entièrement réfléchissante.

Le fait que l'appareil de prise de vue 6 (appareil photographique ou caméra) soit solidarisé avec un montant pouvant coulisser sur la plate-forme 29, de façon à pouvoir éloigner ou rapprocher l'appareil de prise de vue du boîtier 1, est extrêmement important car l'opérateur souhaite souvent pouvoir observer directement à travers l'iris de centrage 46, l'image sur l'écran rétro-réfléchissant. Cette faculté n'est pas permise avec un système de projection dans lequel l'appareil de prise de vue est fixe. De plus, avec certains obturateurs et certains objectifs, il est très difficile de changer le diaphragme de l'objectif et la vitesse de l'obturateur sans avoir un accès total à l'avant de l'appareil de prise de vue. Le montage de l'appareil de prise de vue réalisé selon l'invention permet d'exécuter aisément ces diverses opérations.

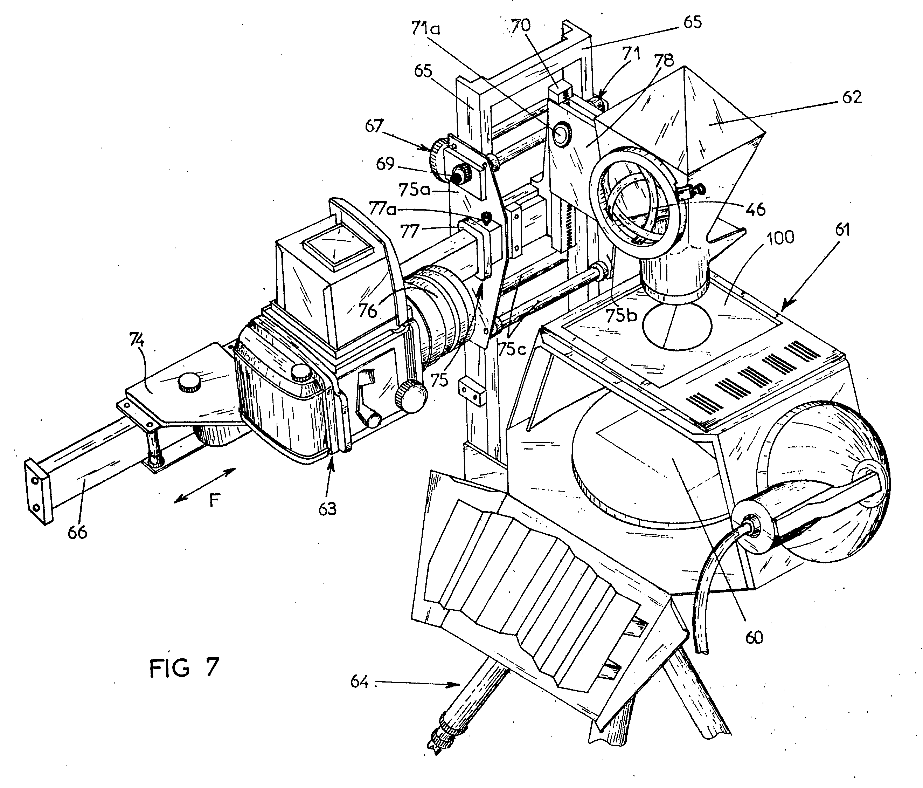

Dans la variante de réalisation représentée à la figure 7, le dispositif est destiné à la projection de documents opaques tels que 60, et les moyens pour permettre le couplage optique entre l'ensemble formé par le boîtier 61 associé au système optique 62 et l'appareil de prise de vue 63, comprennent un trépied 64 supportant une plate-forme orientable sur laquelle repose le boîtier 61. La surface supérieure 100 du boîtier 61 est amovible, comme dans la réalisation précédente.

La plate-forme précitée supporte également deux montants verticaux parallèles 65, qui supportent le système optique 62 par l'intermédiaire d'une tige verticale 70 fixée à une barre horizontale 66 elle-même portée par un chariot 75 disposé à coulisse sur les montants verticaux 65. Ces derniers supportent donc bien le système optique 62.

L'appareil de prise de vue 63 est de son côté porté par une pièce 74 montée à coulisse sur la barre 66, sur laquelle est en outre disposée une bague coulissante 77, au voisinage du chariot 75. Cette bague 77 est associée à un bouton de blocage 77a, et sert de butée à la pièce coulissante 74, afin de permettre le réglage de l'avancement maximum de l'objectif 76 de l'appareil 63.

La barre horizontale 66 est fixée à l'une des deux plaquettes verticales 75a, 75b du chariot qui peuvent coulisser verticalement chacune sur un montant correspondant 65, ces plaquettes verticales étant reliées par des barreaux 75c. Cet ensemble est pourvu des éléments de réglage suivants :

Un système de réglage pour la mise au point, comportant un bouton 67 de manœuvre placé sur l'une des plaquettes 75a constitutives du chariot 75, permet de faire monter ou descendre celui-ci le long des montants 65, un second bouton latéral 69 permettant de bloquer le chariot 75 à la hauteur choisie. La manœuvre du bouton 67 déplace donc en hauteur l'ensemble des pièces portées par le chariot 75 et la barre 66, c'est-à-dire l'appareil de prise de vue 63, et le système optique 62 avec son iris 46. Ceci permet d'effectuer la mise au point sur l'écran (non représenté), de l'image projetée à partir du document 60.

Le système optique 62 est réglable en hauteur sur la tige verticale 70 fixée à la barre 66, au moyen d'un bouton de manœuvre 71, et peut être bloqué par le bouton 71a. Les va-et-vient verticaux du système 62 par rapport à la tige 70 sont assurés par l'intermédiaire d'une plaque verticale de liaison 78 qui peut monter ou descendre le long de la tige 70.

On peut ainsi centrer l'iris 46 par rapport à l'objectif 76 de l'appareil de prise de vue.

Le réglage de ce dispositif s'effectue de la manière suivante :

On règle d'abord la distance entre l'appareil de prise de vue 63 et le système optique 62, en déplaçant l'appareil 63 avec son support coulissant 74 sur la barre 66 (double flèche F). Puis on manœuvre le bouton 71 pour régler la hauteur du système optique 62 et de l'iris 46, afin de centrer ce dernier sur l'objectif 76. Ensuite on utilise les boutons 67 et 69 pour régler la position de l'appareil 63 et du système optique 62 par rapport au document 60 à projeter sur l'écran.

Plusieurs variantes d'exécution sont envisageables. On peut agencer le support 9 de telle façon que l'on puisse faire pivoter l'appareil ou caméra de prise de vue au lieu de l'avancer ou de le reculer. Ceci permet d'avoir accès, soit à l'avant de ce dernier, soit de regarder commodément à travers le miroir 45. Le fond du boîtier 1 peut être rendu complètement amovible, de façon à pouvoir être remplacé par une plaque transparente en verre agencée pour maintenir des livres, des brochures etc... à plat contre la surface du verre, afin de permettre leur projection avec une netteté uniforme, et sans avoir à découper les feuilles de ces livres etc... Dans toutes les formes de réalisation du dispositif de projection selon l'invention, le système de réflecteurs envoie sur l'objectif à projeter pratiquement toute la lumière émise par la source lumineuse, ce qui permet d'obtenir une excellente efficacité d'éclairement, et par conséquent de qualité de l'image projetée sur l'écran rétroréfléchissant. Ce rendement optique et cette qualité ne peuvent être atteints avec les appareils connus prévus pour la projection de documents opaques. Les réflecteurs 22, 23 peuvent être réalisés en métal, par exemple en aluminium oxydé et brillanté, ou en une matière plastique aluminisée sous vide, ou encore en des miroirs ordinaires. S'ils sont en métal, ils peuvent être fabriqués par emboutissage, ou pliage ; en matière plastique, ils peuvent être réalisés par moulage, ou simplement assemblés sur un support approprié si l'on utilise des miroirs ordinaires.

La source lumineuse 3 peut être aussi remplacée par l'un seulement de ses deux éléments constitutifs, c'est-à-dire le tube électronique ou la lampe-guide. On peut remplacer le miroir 45 par un miroir entièrement réfléchissant pour pouvoir utiliser le dispositif comme un épiscope normal, l'appareil de prise de vue étant alors inutilisé.

Par ailleurs, dans la réalisation de la figure 1, il convient de noter que le boîtier du système optique 5 de projection est solidarisé avec le montant 7 par une tige d'attache 10 pourvue d'un collier coulissant autour du montant.

Ceci permet de régler le boîtier du système 5 en hauteur. D'autre part, on peut avantageusement faire la mise au point de l'image projetée en réglant la hauteur du boîtier 1 par rapport au système optique 5, ce qui évite un réglage ultérieur de la position de l'appareil 6 par rapport au système optique 5.

On peut monter le support 52 de la figure 5 sur la face supérieure du boîtier 1, afin d'y glisser des filtres diffuseurs, masques, etc... pour obtenir des effets spéciaux de l'image projetée.

Il convient de noter encore d'autres avantages importants de formes d'exécution du dispositif de projection selon l'invention par rapport au système connu de projecteurs frontaux utilisant des diapositives couleur.

1. On n'est plus limité à la projection d'une diapositive, ou même d'une image photographique sur papier, car il est possible de projeter instantanément des objets, opaques ou non, en deux ou en trois dimensions sans intermédiaire de diapositives couleur. On peut par exemple projeter directement sur l'écran un morceau de tissu derrière un mannequin, ou un flacon de verre, ou des grains de café etc...

2. Pour une diapositive en couleur, on évite une augmentation de contraste, qui entraînerait une perte de détail dans les parties claires et sombres :

3. La surface des objets projetés peut être de dix à trente fois supérieure à la surface des diapositives 24 × 36 mm et 6 × 6 cm utilisées dans les projecteurs de fond connus jusqu'à maintenant. De ce fait, le degré d'agrandissement est très inférieur, et la qualité de l'image projetée est nettement supérieure avec le dispositif selon l'invention.

4. La longueur focale de l'objectif utilisé dans le dispositif selon l'invention est nettement plus grande que celle des objectifs utilisés pour projeter des diapositives 24 × 36 mm et 6 × 6 cm. A titre indicatif, cette longueur focale peut être de 235 mm, alors que la longueur focale des objectifs dans les projecteurs connus, pour la projection de diapositives, est de 50 à 80 mm. En conséquence, la qualité optique obtenue est nettement supérieure, ce qui évite en outre les problèmes de précision de réglage que l'on rencontre avec les objectifs de courte focale. La profondeur de mise au point est corrélativement très supérieure.

5. Le diamètre de l'objectif pouvant être utilisé dans le dispositif de projection selon l'invention est très supérieur à celui des objectifs utilisés jusqu'à présent pour projeter des diapositives 24 × 36 mm et 6 × 6 cm. A titre d'exemple, pour une longueur focale de 235 mm, le diamètre de l'objectif est de 67 mm. Ce grand diamètre élimine un des problèmes majeurs rencontrés avec les systèmes de projecteurs connus, à savoir celui de la ligne noire gênante, observée jusqu'à présent autour du sujet sur l'écran avec les projecteurs de fond classiques ayant des objectifs de projection de faible diamètre. Cette ligne noire est donc supprimée, et on peut corrélativement utiliser des appareils à deux ou quatre objectifs, sans observer la ligne noire silhouettant le sujet. Ainsi, il n'y a plus de problème d'alignement optique avec le dispositif selon l'invention.

6. Avec des systèmes de projecteurs de fond à base de diapositives en couleur, on ne peut que projeter un dispositif qu'on ne peut pratiquement pas déplacer dans le projecteur. En revanche, dans le dispositif de projection selon l'invention, il est possible de déplacer l'objet dans tous les sens, et on peut même placer une multitude d'objets à l'intérieur de cet épiscope, et les déplacer l'un par rapport à l'autre pour faire des véritables compositions différentes. Ceci permet à l'utilisateur de créer son fond en fonction du sujet, et en fonction des objets ou documents choisis pour être projetés derrière le sujet sur l'écran.

On notera encore une variante intéressante de réalisation du dispositif selon l'invention : le fond du boîtier contenant les réflecteurs et l'objet (ou les objets) à projeter peut être ouvert, afin de permettre le défilement au niveau du fond, d'une succession d'objets ou de vues à projeter au moyen d'un système approprié connu en soi, placé sous le boîtier. Un tel dispositif peut être utilisé notamment pour la projection d'objets à la télévision.

**Revendications**

1. Dispositif de projection permettant la prise de vue de l'image projetée d'un objet, destiné notamment à la photographie, au cinéma et à la télévision, comprenant une source lumineuse (3), un système réflecteur (18, 22, 23), un système optique de projection (5, 62), un appareil de prise de vue (6, 63) et des moyens de réglage pour permettre un couplage optique, caractérisé par le fait qu'il comprend de plus un boîtier (1, 61) pour recevoir ledit objet, ledit système réflecteur (18, 22, 23) étant placé à l'intérieur du boîtier de façon à réfléchir la lumière émise par ladite source (3) sur ledit objet à projeter, la face supérieure du boîtier (1, 61) étant percée pour permettre le passage du flux lumineux dans ledit système optique de projection (5, 62) placé au-dessus dudit boîtier et destiné à coopérer avec ledit appareil de prise de vue (6, 63) dudit objet disposé dans ledit boîtier (1, 61), ce dernier étant assujetti de façon réglable en hauteur à un montant (7, 65) de support, et en ce que lesdits moyens de réglage pour permettre un couplage optique sont agencés pour permettre un couplage optique entre d'une part ledit appareil de prise de vue (6) et d'autre part ledit système optique (5, 62) et ledit boîtier (1, 61).

2. Dispositif selon la revendication 1, caractérisé en ce que le boîtier (1) est réalisé par exemple en tronc de pyramide dont la plus grande face constitue le fond, lequel est pourvu d'un support central rotatif (2) prévu pour recevoir ledit objet (26) à projeter, en ce que le système réflecteur comprend un réflecteur cylindrique à section elliptique (18) fixé à la paroi (19) du boîtier située en face de la source lumineuse (3), et deux autres réflecteurs (22, 23) fixés aux parois latérales et pliés en accordéon avec des facettes réfléchissantes constituées par des portions d'ellipsoïdes, ces derniers réflecteurs recevant la lumière non réfléchie par le réflecteur cylindrique (18).

3. Dispositif selon la revendication 2, caractérisé en ce que les portions d'ellipsoïdes formant les facettes réfléchissantes des réflecteurs latéraux (22, 23) sont orientées par rapport à la source lumineuse (3) de façon à réfléchir une partie de la lumière reçue directement de la source (3) sur une partie prédéterminée dudit objet à projeter (26).

4. Dispositif selon l'une des revendications 2 et 3, caractérisé en ce que la surface intérieure du boîtier (1, 61) non recouverte par les réflecteurs (18, 22, 23) et par ledit objet à projeter est noircie afin d'éviter des réflexions parasites.

5. Dispositif selon la revendication 1, destiné à la projection de diapositives, caractérisé en ce que le système réflecteur comprend une calotte ellipsoïdale (16) disposée sur le fond du boîtier (1) et à l'intérieur de laquelle est placée la source lumineuse (3), de façon à ce que la lumière émise par celle-ci soit réfléchie vers la zone centrale de la face supérieure du boîtier (1) percée à cet effet, et en ce que cette zone centrale est munie d'un dispositif (49) de support de la diapositive (51) à projeter.

6. Dispositif selon l'une des revendications 1 à 5, caractérisé en ce que les moyens pour permettre le couplage optique entre l'ensemble formé par le boîtier (1) associé au système optique (5), et l'appareil de prise de vue (6), comprennent une plate-forme (29), supportant un cadre pivotant qui porte deux montants verticaux (7, 8) portant respectivement l'ensemble boîtier (1), système optique (5) de projection, et l'appareil de prise de vue (6), et ce de façon réglable en hauteur, des moyens étant en outre prévus pour pouvoir rapprocher ou éloigner ledit appareil du système optique (5) associé et pour l'incliner par rapport à ce dernier.

7. Dispositif selon la revendication 6, caractérisé en ce que le montant (8) de support de l'appareil de prise de vue (6) est solidaire à sa base d'un socle (33) monté sur un cadre (34) pouvant pivoter autour d'un axe (35) passant au voisinage du montant (7) de support de l'ensemble boîtier-système optique, ce cadre (34) étant disposé sur la plate-forme (29), et le socle (33) pouvant de plus coulisser d'une extrémité à l'autre du cadre (34), par exemple au moyen d'un système de galets (38) et de rails de guidage (39), le second montant (8) étant également supporté par ce cadre pivotant.

8. Dispositif selon l'une des revendications 1 à 5, caractérisé en ce que les moyens pour permettre le couplage optique entre l'ensemble formé par le boîtier (61) associé au système optique (62), et l'appareil de prise de vue (63) comprennent un trépied (64) supportant une plate-forme orientable sur laquelle repose le boîtier (61) et dont sont solidaires deux montants verticaux (65), qui portent le système optique (62) et l'appareil de prise de vue (63) par l'intermédiaire de moyens de réglage de ceux-ci en hauteur par rapport au boîtier (62), et de réglage des positions relatives de l'appareil de prise de vue (63) et du système optique (62).

9. Dispositif selon la revendication 8, caractérisé en ce qu'un chariot (75) est monté à coulisse verticalement sur les montants de façon réglable en hauteur, et porte le système optique (62) placé au-dessus du boîtier (61) précité, ainsi qu'une barre horizontale (66) sur laquelle l'appareil de prise de vue (63) est monté à coulisse horizontalement.

10. Dispositif selon la revendication 9, caractérisé en ce que la barre horizontale (66) est équipée d'une butée (77) pour l'appareil de prise de vue, et en ce que le système optique (62) contenant l'iris (46) est supporté par une tige verticale (70) elle-même portée par le chariot coulissant (75), un système de réglage en hauteur (78, 71, 71a) placé sur cette tige verticale (70) permettant de faire varier la hauteur de l'iris (46) pour le centrer par rapport à l'objectif (76) de l'appareil de prise de vue (63).

11. Dispositif selon l'une des revendications 1 à 10, caractérisé en ce que le fond du boîtier (1, 61) est ouvert, et en ce qu'il comprend des moyens placés sous le boîtier pour permettre le défilement d'une succession d'objets à projeter.

**Claims**

1. A projection device for picking-up the projected image of an opaque object and applicable in particular to photography, motion pictures and television, wherein said device comprises a light source (3), a reflecting system (18, 22, 23), an optical projection system (5, 62), a camera (6, 23) and adjustment means for permitting optical coupling, characterized in that said device further comprises a housing (1, 61) for receiving said object, said reflecting system (18, 22, 23) being placed within the housing so as the reflect the light emitted by said source (3) onto the object to be projected, the top face of the housing (1, 61) being pierced in order to permit the passage of the luminous flux through said optical projection system (5, 62), said system being placed above said housing and intended to cooperate with said camera (6, 63) in order to pick-up the image of the object placed within the housing (1, 61), said housing being secured to a vertical support member (7, 65) in such a manner as to be adjustable for height, and wherein the aforesaid adjustment means for optical coupling are so arranged as to permit optical coupling between on the one hand said camera (6) and on the other hand said optical system (5, 62) and said housing (1, 61).

2. A projection device according to claim 1, characterized in that the largest face of the housing (1) constitutes the bottom wall and is provided with a rotatable central support (2) adapted to receive an object (26) to be projected, wherein the reflecting system comprises a cylindrical reflector (18) having an elliptical cross-section and attached to the housing wall (19) located opposite to the light source (3), and two other reflectors (22, 23) attached to the side walls and folded in bellows-type pleats with reflecting facets constituted by portions of ellipsoids, the last-mentioned reflectors being intended to receive the light which is not reflected from said cylindrical reflector (18).

3. A projection device according to claim 2, characterized in that the portions of ellipsoids forming the reflecting facets of the side reflectors (22, 23) are oriented with respect to the light source (3) in such a manner as to reflect part of the light received directly from the source (3) onto a predetermined portion of said object (26) to be projected.

4. A projection device according to claim 1 or claim 2, characterized in that internal surface of the housing (1, 61) which is not covered by said reflectors (18, 22, 23) and by said object is blackened in order to prevent parasitic reflections.

5. A projection device according to claim 1 and applicable to the projection of diapositives, characterized in that the reflecting system is constituted by an ellipsoidal reflector (16) which is mounted on the bottom wall of the housing (1) and within which is placed the light source (3) so as to ensure that the light emitted by said source is reflected towards the central zone of the top face of the housing (1) which is pierced for this purpose, and wherein said central zone is fitted with a device (49) for supporting the diapositive (51) to be projected.

6. A projection device according to anyone of claims 1 through 5, characterized in that the means for permitting optical coupling between the camera (6) and the assembly formed by the housing (1) associated with the optical system (5) comprise a platform (29) for supporting a pivoting frame which is adapted to carry two vertical upright members (7, 8), said upright members being adapted to carry respectively the assembly consisting of housing (1) and optical projection system (5) and the camera (6) in such a manner as to permit adjustment for height, means being further provided for moving said camera towards or away from the associated optical system (5).

7. A projection device according to claim 6, characterized in that the aforesaid upright member (8) for carrying the camera (6) is rigidly fixed at the lower end to a base (33) mounted on a frame (34) placed on the platform (29) and capable of pivoting about an axis (35) which passes in the vicinity of the upright member (7) for supporting the assembly consisting of housing (1) and optical system (5), said base (33) being also capable of sliding from one end of said frame (34) to the other by means of a system of rollers (38) and guide rails (39) for example, the aforesaid upright member (8) for carrying the assembly consisting of housing (1) and optical system (5) being also supported by said pivoting frame (34).

8. A projection device according to anyone of claims 1 through 5, characterized in that the adjustment means for permitting optical coupling between the camera (63) and the assembly formed by the housing (61) associated with the optical system (62), comprise a tripod (64) for supporting an orientable platform on which the housing (61) rests and to which two vertical upright members (65) are rigidly fixed, said upright members being adapted to carry the optical system (62) and the camera (63) and provided with means for adjusting the height of said system and said camera with respect to the housing (62) and for adjusting the relative positions of said camera (63) and said optical system (62).

9. A projection device according to claim 8, characterized in that a carriage (75) is slidably mounted for vertical displacement on the upright members and adjustable for height, said carriage being (75) adapted to support the optical system (62) placed above the housing (61) aforesaid as well as a horizontal bar (66) on which the camera (63) is slidably mounted for horizontal displacement.

10. A projection device according to claim 9, characterized in that the horizontal bar (66) is equipped with a stop (77) for the camera and wherein the optical system (62) containing the iris diaphragm (46) is supported by a vertical rod (70) which is in turn supported by the sliding carriage (75), a heigh-adjustment system (78, 71, 71a) placed on said vertical rod (70) being intended to permit height adjustment of the iris diaphragm (46) in order to center said diaphragm with respect to the lens (76) of the camera (63).

11. A projection device according to anyone of claims 1 through 10, characterized in that the bottom of the housing (1, 61) is open, and wherein said device comprises means places beneath the housing in order to permit continuous displacement of a succession of objects to be projected.

**Ansprüche :**

1. Projektionsvorrichtung, mit der eine Aufnahme des projizierten Bildes eines Objekts vorgenommen werden kann, insbesondere für die Photographie, die Filmtechnik und das Fernsehen bestimmt, mit einer Lichtquelle (3), einem Reflexionssystem (18, 22, 23), einem optischen Projektionssystem (5, 62), einem Aufnahmeapparat (6, 63) und einer Einstelleinrichtung zum Herbeiführen einer optischen Kopplung, dadurch gekennzeichnet, daß außerdem ein Gehäuse (1, 61) zur Unterbringung des genannten Objekts vorgesehen ist, daß das Reflektorsystem (18, 22, 23) so innerhalb des Gehäuses angeordnet ist, daß das von der Lichtquelle (3) ausgehende Licht auf das zu projizierende Objekt gelangt, daß die Deckwand des Gehäuses (1, 61) eine Öffnung für den Durchtritt des Lichtstroms in das optische Projektionssystem (5, 62) aufweist, das oberhalb des Gehäuses angeordnet ist und mit dem Apparat (6, 63) für die Aufnahme des in dem Gehäuse (1, 61) befindlichen Objekts zusammenzuwirken hat, daß das Gehäuse höhenverstellbar an einem Tragständer (7, 65) angebracht ist, und daß die Einstelleinrichtung zum Herbeiführen einer optischen Kopplung so angeordnet ist, daß eine optische Kopplung zwischen dem Aufnahmeapparat (6) einerseits und dem optischen System (5, 62) und dem Gehäuse (1, 61) andererseits hergestellt ist.

2. Projektionsvorrichtung nach Anspruch 1, dadurch gekennzeichnet, daß das Gehäuse (1) beispielsweise pyramidenstumpfartig ausgeführt ist und die größte Fläche den Gehäuseboden bildet, der einen mittleren drehbaren Halter (2) für die Unterbringung des zu projizierenden Objekts (26) besitzt, daß das Reflektorsystem einen an der der Lichtquelle (3) gegenüberstehenden Gehäusewand (19) befestigten zylindrischen Reflektor (18) mit elliptischem Querschnitt, sowie zwei weitere Reflektoren (22, 23) umfaßt, die an den Seitenwänden befestigt und ziehharmonikaartig gefaltet sind, wobei die reflektierenden Facetten ellipsoidartig gewölbt sind und die letztgenannten Reflektoren das nicht von dem zylindrischen Reflektor (18) reflektierte Licht auffangen.

3. Projektionsvorrichtung nach Anspruch 2, dadurch gekennzeichnet, daß die die reflektierenden Facetten der seitlichen Reflektoren (22, 23) bildenden Ellipsoidteile der Lichtquelle (3) zugewandt sind und einen Teil des unmittelbar von der Lichtquelle (3) empfangenen Lichtes auf einen vorbestimmten Bereich des zu projizierenden Objekts (26) reflektieren.

4. Projektionsvorrichtung nach Anspruch 2 oder 3, dadurch gekennzeichnet, daß die nicht von den Reflektoren (18, 22, 23) und von dem zu projizierenden Objekt eingenommene Innenwandfläche des Gehäuses (1, 61) geschwärzt ist, um störende Reflexionen zu verhindern.

5. Projektionsvorrichtung nach Anspruch 1 für die Projektion von Diapositiven, dadurch gekennzeichnet, daß das Reflektorsystem eine ellipsoidförmige Kappe (16) umfaßt, die am Boden des Gehäuses (1) angeordnet ist und in ihrem Inneren die Lichtquelle (3) in der Weise aufnimmt, daß das von dieser ausgesandte Licht in den mittleren Bereich der Deckwand des Gehäuses (1) reflektiert wird, wo eine Durchbrechung vorgesehen ist, und daß dieser mittlere Bereich mit einer Halterungsvorrichtung (49) für das zu projizierende Diapositiv versehen ist.

6. Projektionsvorrichtung nach einem der Ansprüche 1 bis 5, dadurch gekennzeichnet, daß die Einrichtung zum Herbeiführen der optischen Kopplung zwischen der Bauteilgruppe, die aus dem Gehäuse (1) und dem zugehörigen optischen System (5) besteht, und dem Aufnahmeapparat (6) eine Plattform (29) aufweist, die einen schwenkbaren Rahmen trägt, von dem zwei vertikal stehende Ständer (7 bzw. 8) ausgehen, die die Bauteilgruppe aus Gehäuse (1) und optischem Projektionssystem (5) bzw. den Aufnahmeapparat (6) höhenverstellbar tragen, und daß außerdem eine Einrichtung vorgesehen ist, mit der der Aufnahmeapparat (6) dem zugeordneten optischen System (5) genähert oder von ihm entfernt werden und der Apparat gegenüber dem System geneigt werden kann.

7. Projektionsvorrichtung nach Anspruch 6, dadurch gekennzeichnet, daß der Tragständer (8) für den Aufnahmeapparat (6) an seinem Fußende mit einem Sockel (33) starr verbunden ist, der auf einem Rahmen (34) angeordnet ist, der um eine nahe dem Tragständer (7) für die Bauteilgruppe Gehäuse-Projektionssystem verlaufende Achse (35) verschwenkbar ist, daß der Rahmen (34) auf der Plattform (29) angeordnet ist, daß der Sockel (33) sich außerdem von dem einen Ende des Rahmens (34) zu dessen anderem Ende verschieben läßt, wozu beispielsweise eine Gruppe von Rollen (38) und Führungsschienen (39) dient, und daß der zweite Ständer (8) ebenfalls auf dem schwenkbaren Rahmen angebracht ist.

8. Projektionsvorrichtung nach einem der Ansprüche 1 bis 5, dadurch gekennzeichnet, daß die Einrichtung zum Herbeiführen der optischen Kopplung zwischen der Bauteilgruppe aus Gehäuse (1) und zugeordnetem optischen System (62) und dem Aufnahmeapparat (63) ein Dreibeinstativ (64) umfaßt, das eine ausrichtbare Plattform trägt, auf der das Gehäuse (61) ruht und mit der zwei Vertikalständer (65) starr verbunden sind, die das optische System (62) und den Aufnahmeapparat (63) an einer Einrichtung zum Verstellen dieser Teile in ihrer Höhe über dem Gehäuse (62) und zum Einstellen der gegenseitigen Lage von Aufnahmeapparat (63) und optischem System (62), tragen.

9. Projektionsvorrichtung nach Anspruch 8, dadurch gekennzeichnet, daß an den Ständern höhenverstellbar ein Schlitten (75) angeordnet ist, der das über dem Gehäuse (61) befindliche optische System (62) sowie eine waagerechte Schiene (66) trägt, auf der der Aufnahmeapparat (63) waagerecht verschiebbar angeordnet ist.

10. Projektionsvorrichtung nach Anspruch 9, dadurch gekennzeichnet, daß die waagerechte Schiene (66) einen Anschlag (77) für den Aufnahmeapparat aufweist, und daß das optische System (62) mit der daran befindlichen Irisblende (46) an einer vertikalen Stange (70) gehalten ist, die ihrerseits von dem verschiebbaren Schlitten (75) gehalten wird, und daß ein an der vertikalen Stange (70) vorgesehenes System (78, 71, 71a) zur Höhenverstellung eine Veränderung der Höhenlage der Irisblende (46) herbeizuführen erlaubt, um diese gegenüber dem Objektiv (76) des Aufnahmeapparats (63) zu zentrieren.

11. Projektionsvorrichtung nach einem der Ansprüche 1 bis 10, dadurch gekennzeichnet, daß der Boden des Gehäuses (1, 61) offen ist, und daß unter dem Gehäuse eine Einrichtung vorgesehen ist, mit der eine Folge von zu projizierenden Objekten vorbeigeführt werden kann.

Fig.1

**0 001 951**

Fig:2

Fig:3

Fig:4

Fig. 5

Fig. 6

FIG 7